Europäisches Patentamt

European Patent Office

Office européen des brevets

(11) Numéro de publication: **0 279 748**
**A1**

(12) **DEMANDE DE BREVET EUROPEEN**

(21) Numéro de dépôt: **88400359.1**

(22) Date de dépôt: **17.02.88**

(51) Int. Cl.⁴: **H 02 B 1/12**
**B 63 C 11/52**

(30) Priorité: **18.02.87 FR 8702068**

(43) Date de publication de la demande:
**24.08.88 Bulletin 88/34**

(84) Etats contractants désignés:
**AT BE CH DE ES FR GB GR IT LI LU NL SE**

(71) Demandeur: **SPIE BATIGNOLLES**
**Tour Anjou 33 Quai de Dion-Bouton**
**F-92814 Puteaux (FR)**

(72) Inventeur: **Bright, Jack**
**30 rue Paul Bert**
**F-93400 Saint-Ouen (FR)**

**Maury, Georges**
**37 Chemin des Hauts Graviers**
**F-91370 Verrieres Le Buisson (FR)**

(74) Mandataire: **Bouju, André**
**Cabinet Bouju 38 avenue de la Grande Armée**
**F-75017 Paris (FR)**

(54) **Installation électrique immergeable.**

㉗ L'installation électrique immergeable dans l'eau comprend une enveloppe extérieure (1) dans laquelle sont regroupés les organes (2, 3, 4, 5, 6) de l'installation qui ne supportent pas le contact direct avec l'eau.

La partie inférieure (7) de l'enveloppe (1) comporte au moins une ouverture fermée par un volet (9), ce volet (9) pouvant s'ouvrir sous l'effet de la pression d'eau lorsque l'enveloppe est immergée.

Utilisation pour protéger les installations électriques sur les chantiers inondables.

FIG. 2

# Description

## "Installation électrique immergeable"

La présente invention concerne une installation immergeable dans l'eau, en particulier dans l'eau de mer.

Dans la construction d'ouvrages souterrains et en particulier dans la construction de tunnels passant sous la mer, sous un lac ou sous un cours d'eau, les installations électriques utilisées doivent être protégées contre les risques d'immersion.

Les installations électriques les plus fréquemment utilisées sont les transformateurs haute tension ou moyenne tension. Ces transformateurs comportent des organes électriques de commande et de protection qui ne supportent pas le contact direct avec l'eau.

Ces installations sont généralement coûteuses, de sorte qu'il est souhaitable qu'elles ne soient pas détruites, lorsqu'elles sont immergées dans l'eau, d'une manière accidentelle.

Pour éviter un tel risque, la solution consiste à regrouper les organes électriques de l'installation qui ne supportent pas le contact avec l'eau dans une enveloppe extérieure étanche.

Toutefois, cette enveloppe doit être suffisamment épaisse pour supporter la pression exercée par l'eau, en cas d'immersion.

Ainsi, dans le cas d'une immersion dans six mètres d'eau, ce qui correspond à la hauteur d'un tunnel complètement rempli d'eau, l'enveloppe doit être en fonte d'épaisseur égale à au moins huit millimètres. Une telle enveloppe est par conséquent onéreuse, lourde et difficilement transportable.

Or, dans la construction d'un ouvrage souterrain tel qu'un tunnel, on doit pouvoir déplacer facilement les installations électriques au fur et à mesure de l'avancement de l'ouvrage.

Le but de l'invention est de créer une installation électrique immergeable dans l'eau qui soit de construction simple, légère, peu onéreuse et facilement transportable.

L'installation électrique immergeable dans l'eau, visée par l'invention, comprend une enveloppe extérieure dans laquelle sont regroupés les organes de l'installation qui ne supportent pas le contact direct avec l'eau.

Suivant l'invention, cette installation est caractérisée en ce que la partie inférieure de l'enveloppe comporte au moins une ouverture étanche fermée par un volet, ce volet pouvant s'ouvrir sous l'effet de la pression d'eau lorsque l'enveloppe est immergée.

Ainsi, lorsque le lieu dans lequel est située l'installation selon l'invention est inondé, l'eau pénètre à l'intérieur de l'enveloppe en passant par la ou les ouvertures de l'enveloppe. Le niveau de l'eau monte à l'intérieur de l'enveloppe jusqu'à ce que la pression régnant au-dessus de l'eau à l'intérieur de l'enveloppe équilibre la pression de l'eau à l'extérieur de cette enveloppe, conformément à la loi de Marriotte.

Grâce à cet équilibre de pression, les parois de l'enveloppe peuvent être relativement minces, ce qui rend la construction de l'installation peu coûteuse, légère et facilement transportable.

Par ailleurs, étant doné que même lorsque l'enveloppe est entièrement immergée dans l'eau, le niveau de l'eau ne monte à l'intérieur de l'enveloppe que jusqu'à un certain niveau que l'on peut déterminer par le calcul, les organes situés au-dessus de ce niveau ne risquent pas d'être en contact avec l'eau.

Par conséquent, il suffit, lors de la construction de l'installation, de s'assurer que les organes qui ne supportent pas le contact avec l'eau soient placés au-dessus du niveau maximum que l'eau peut atteindre à l'intérieur de l'enveloppe.

Selon une version avanatageuse de l'invention, la partie de l'enveloppe extérieure qui est située sous les organes qui ne supportent pas le contact avec l'eau est élargie par rapport à la partie de l'enveloppe qui est située au-dessus desdits organes.

Cette disposition permet de limiter la hauteur de la montée de l'eau à l'intérieur de l'enveloppe et ainsi de diminuer la hauteur totale de l'enveloppe en rendant celle-ci plus compacte et moins encombrante.

Selon une version préférée de l'invention, lesdites parties de l'enveloppe situées en-dessous et au-dessous desdits organes sont de forme générale parallélépipédique.

Cette construction est simple et économique à réaliser. Une telle construction est considérée dans l'art antérieur comme peu compatible avec les pressions engendrées lors d'une immersion. Cependant, cette construction de forme simple convient parfaitement dans le cas de l'installation selon l'invention, étant donné que l'équilibre des pressions intérieure et extérieure est réalisé lors de l'immersion.

D'autres particularités et avantages de l'invention apparaîtront encore dans la description ci-après.

Aux dessins annexés donnés à titre d'exemples non limitatifs :

- la figure 1 est une vue en perspective d'une installation électrique conforme à l'invention,

- la figure 2 est une vue en élévation et en coupe longitudinale partielle de l'installation,

- la figure 3 est une vue en coupe suivant le plan III-III de la figure 2,

- la figure 4 est une vue schématique illustrant le fonctionnement de l'installation selon l'invention.

- la figure 5 est une vue semblable à la figure 2 d'un autre mode de réalisation de l'invention, le transformateur n'étant pas représenté,

la figure 6 est une vue schématique illustrant le fonctionnement de l'installation de la figure 5.

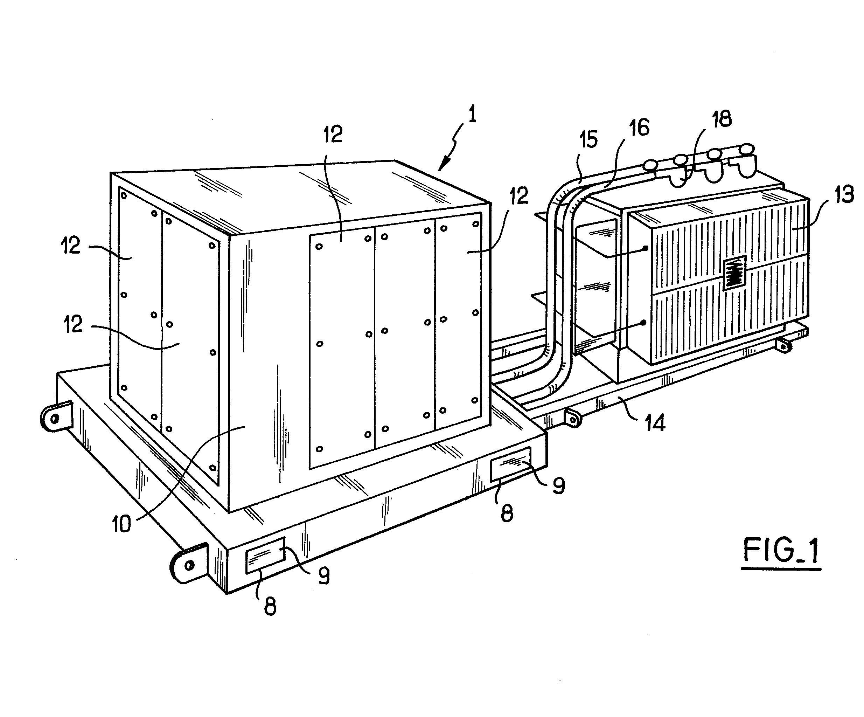

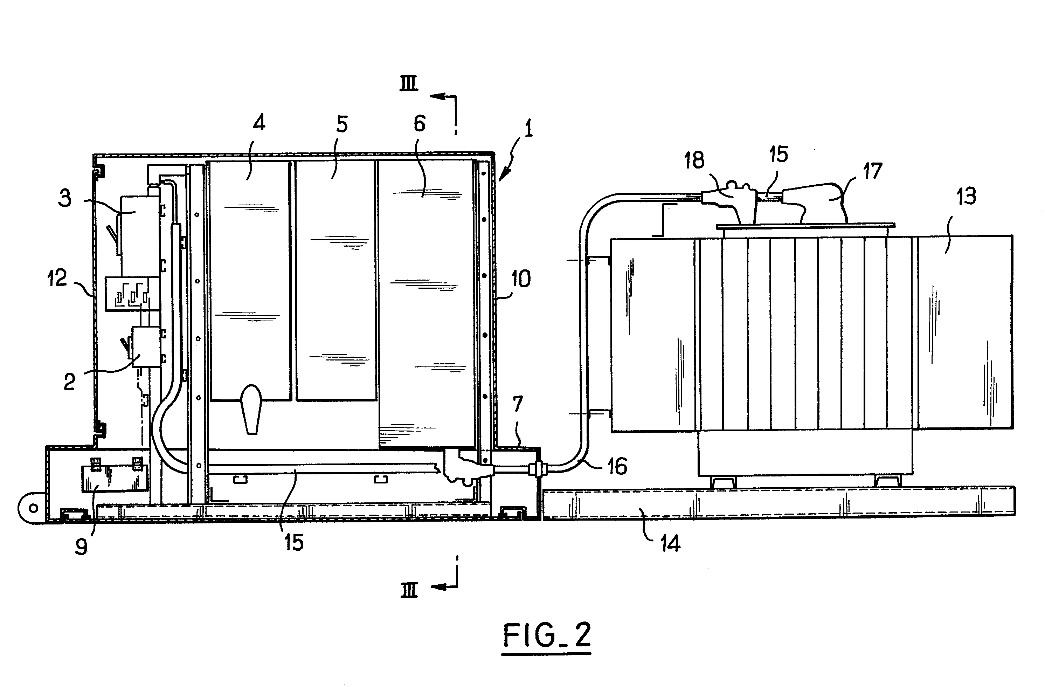

Dans la réalisation des figures 1 à 3, l'installation électrique immergeable dans l'eau, en particulier dans l'eau de mer, comprend une enveloppe extérieure 1 dans laquelle sont regroupés les organes 2, 3, 4, 5, 6 (voir figure 2) de l'installation qui ne supportent pas le contact direct avec l'eau.

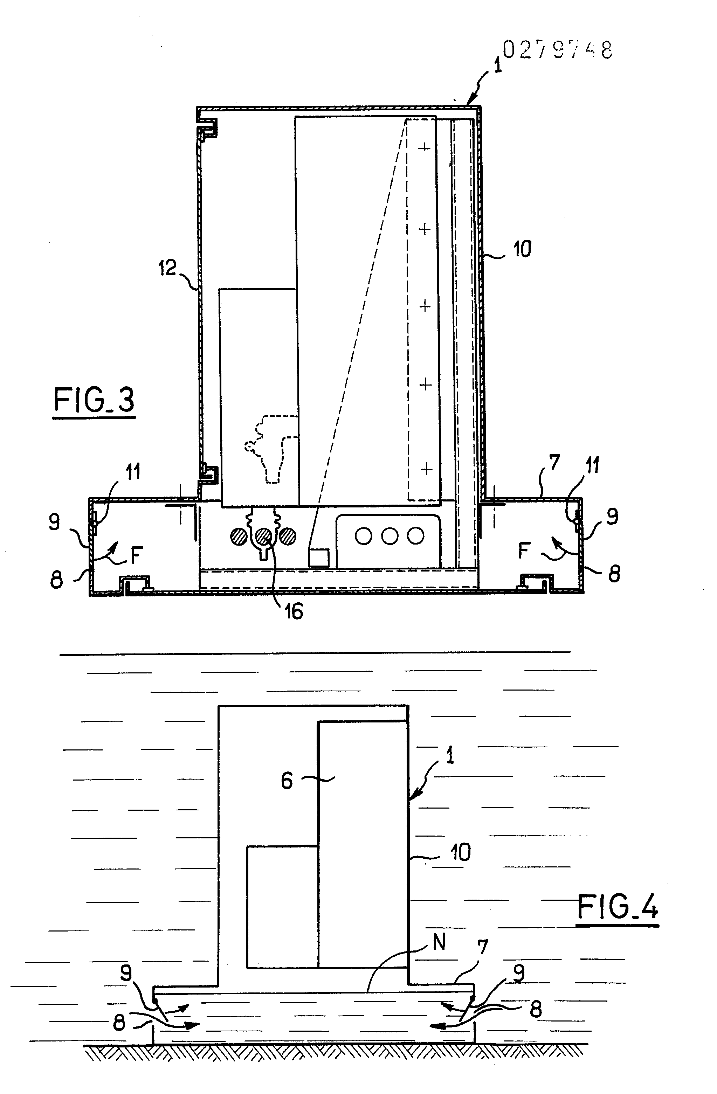

La partie inférieure 7 de l'enveloppe 1 comporte des ouvertures 8 étanches, fermées par un volet 9 (voir figure 3).

Ces volets 9 peuvent s'ouvrir sous l'effet de la pression d'eau lorsque l'enveloppe 1 est immergée, comme on le décrira plus en détail plus loin.

Pour éviter tout contact avec l'eau, les organes 2, 3, 4, 5, 6 sont placés au-dessus du niveau maximum que l'eau peut atteindre à l'intérieur de l'enveloppe 1. Ce niveau maximum peut être calculé selon la loi de Marriotte.

Dans la réalisation représentée, la partie 7 de l'enveloppe extérieure 1 qui est située sous les organes 2, 3, 4, 5, 6 qui ne supportent pas le contact avec l'eau est élargie par rapport à la partie 10 de l'enveloppe qui est située au-dessus des organes ci-dessus.

Par ailleurs, les parties 7 et 10 de l'enveloppe 1 situées en-dessous et au-dessus desdits organes 2, 3, 4, 5, 6 sont de forme générale parallélépipédique et sont réalisées à partir de tôles planes d'épaisseur égale à 4 mm environ. Cette épaisseur est nettement inférieure à celle normalement nécessaire dans les réalisations connues pour supporter la pression de l'eau lorsque l'enveloppe est immergée.

Ces tôles peuvent être en acier ordinaire ou en acier inoxydable si elles doivent résister au contact de l'eau de mer.

On voit sur la figure 3 que chaque volet 9 est articulé au moyen d'une charnière 11, au bord supérieur de l'ouverture 8 et ferme celle-ci de façon sensiblement étanche lorsque l'enveloppe n'est pas immergée dans l'eau. Chaque volet 9 peut s'ouvrir vers l'intérieur de l'enveloppe 1 (voir flèches F sur la figure 3), sous l'effet de la pression de l'eau lorsque l'enveloppe 1 est immergée.

On voit également sur la figure 1, que les faces latérales de l'enveloppe 1 comportent des panneaux 12 amovibles et étanches en regard des organes 2, 3, 4, 5, 6 ne supportant pas le contact avec l'eau. Ces panneaux 12 permettent ainsi d'accéder à l'intérieur de l'enveloppe 1 pour inspecter ou réparer les organes ci-dessus.

Dans la réalisation représentée, l'installation représentée à titre d'exemple non limitatif comprend un transformateur de tension 13 (630 à 1 600 KVA-20 KV/380 V) qui est lui-même immergeable et est placé à l'extérieur de l'enveloppe 1. Cette enveloppe 1 et le transformateur 13 sont fixés dans le prolongement l'un de l'autre sur un bâti commun 14 formant socle.

Les organes 2, 3, 4, 5, 6 sont reliés au transformateur 13 par deux câbles 15, 16 basse tension et haute tension étanches qui supportent donc l'immersion. Ces câbles 15, 16 sont connectés à la partie supérieure du transformateur 13 par des prises spéciales 17, 18 (voir figure 2) étanches, moulées en matière plastique. Ces câbles 15, 16 pénètrent à la partie inférieure 7 de l'enveloppe 1.

Les organes 4, 5, 6 sont reliés au câble haute tension. L'organe 4 constitue l'arrivée et l'organe 5 le départ de la ligne haute tension. L'organe 6 est l'organe de protection haute-tension du transformateur.

Le câble basse tension 15 s'étend à une certaine distance au-dessus du fond de l'enveloppe 1 et est relié à l'organe 3 général de protection de la basse tension.

L'organe 2 situé sous l'organe 3 est un disjoncteur.

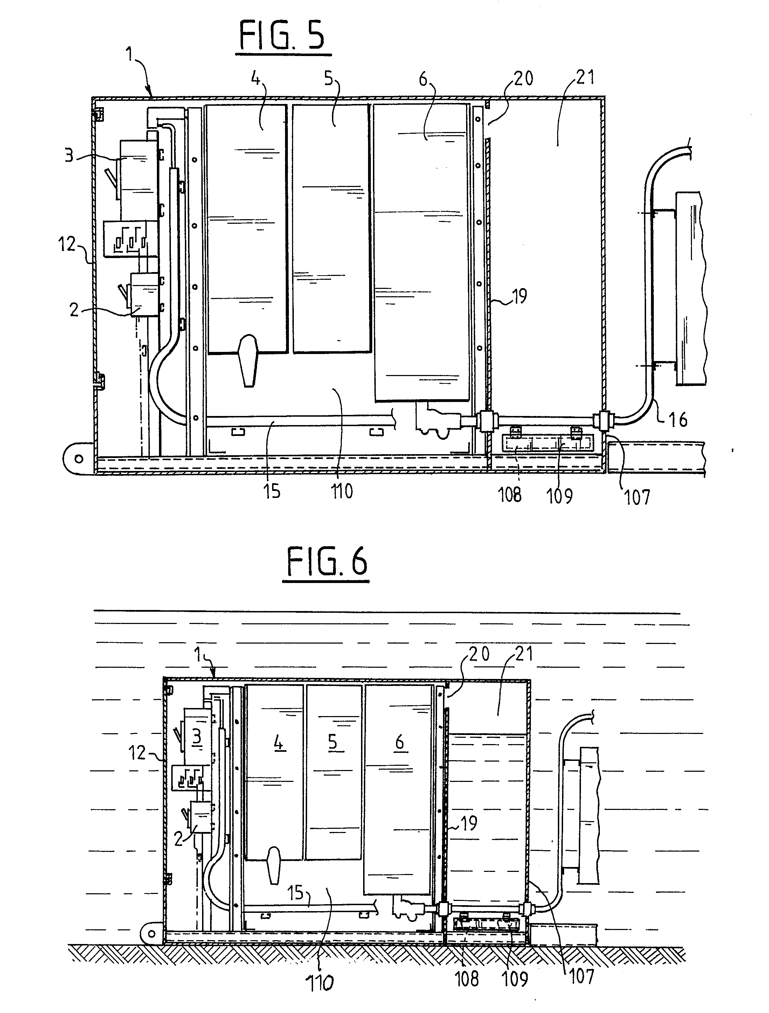

Dans la réalisation de la figure 5, une cloison intérieure 19 sépare l'enveloppe 1 en une partie 110 dans laquelle sont regroupés les organes 2, 3, 4, 5, 6 qui ne supportent pas le contact direct avec l'eau, et une partie 21 qui ne comporte aucun organe et qui présente à sa partie inférieure 107 au moins une ouverture 108 fermée par un volet 109, la cloison 19 comportant à sa partie supérieure une ouverture 20 mettant en communication les parties 110 et 21.

Les volets 109 sont identiques aux volets 9 décrits ci-dessus et peuvent s'ouvrir sous l'effet de la pression d'eau lorsque l'enveloppe 1 est immergée.

Les parties 110 et 21 sont de forme générale parallélépipédique et réalisées comme les parties 7 et 10.

La cloison 19 sépare de façon étanche les parties 110 et 21 sauf dans sa partie supérieure où l'ouverture 20 met celles-ci en communication l'une avec l'autre.

Les autres caractéristiques de ce mode de réalisation sont identiques à celles du premier mode de réalisation des figures 1 à 3.

On va maintenant expliquer en référence à la figure 4, le fonctionnement de l'installation que l'on vient de décrire en référence aux figures 1 à 3.

Normalement, c'est-à-dire lorsque l'enveloppe 1 n'est pas immergée, les volets 9 ferment de façon sensiblement étanche les ouvertures 8 ménagées à la partie inférieure 7 de l'enveloppe 1. Ainsi, l'intérieur de cette enveloppe 1 est protégé à l'égard de la poussière, de l'humidité et du brouillard salin.

On supposera que l'installation est située dans un tunnel placé sous la mer, un lac ou un cours d'eau et que de l'eau pénètre accidentellement dans ce tunnel et l'inonde.

La pression exercée par l'eau, ouvre les volets 9 vers l'intérieur de l'enveloppe et l'eau pénètre à l'intérieur de celle-ci. En montant à l'intérieur de l'enveloppe 1, l'eau comprime l'air contenu dans le volume situé au-dessus de l'eau. Lorsque la pression de l'air contenu dans ce volume atteint la pression de l'eau extérieure, l'eau ne monte plus à l'intérieur de l'enveloppe 1. Ainsi, connaissant la hauteur maximum d'immersion de l'enveloppe 1, il est possible de calculer selon la loi de Marriotte, le niveau d'eau maximum N à l'intérieur de l'enveloppe 1 et préserver ainsi les organes 2, 3, 4, 5, 6 de tout contact avec l'eau.

Etant donné que la partie inférieure 7 de l'enveloppe 1 est élargie par rapport à la partie supérieure 10, le niveau d'eau atteint dans l'enveloppe 1 sera généralement faible par rapport à la hauteur totale de cette enveloppe. Ainsi, le volume intérieur de cette enveloppe 1 peut être presqu'entièrement utilisé pour loger les organes 2, 3, 4, 5, 6 de l'installation.

Par ailleurs, étant donné que lors de l'immersion, les pressions exercées sur l'enveloppe sont équilibrées, l'enveloppe 1 peut être réalisée au moyen de tôles minces et planes et cette enveloppe peut avoir une forme parallélépipédique peu coûteuse à réaliser et permettant de loger de façon optimale les différents organes sensibles à l'eau.

Etant donné la relative légèreté de la construction de l'enveloppe 1, celle-ci peut être transportée et déplacée facilement sur le chantier.

Le fonctionnement du mode de réalisation représenté à la figure 5 est schématisé à la figure 6.

Les volets 109 fonctinnent comme les volets 9. Lorsque l'installation est immergée accidentellement, les volets 109 s'ouvrent vers l'intérieur de l'enveloppe et l'eau pénètre à l'intérieur de la partie 21. En montant dans celle-ci, l'eau comprime l'air contenu dans le volume situé dans la partie 110 et dans la partie 21 au-dessus de l'eau. Lorsque la pression de l'air dans ce volume atteint la pression de l'eau extérieure, l'eau ne monte plus à l'intérieur de la partie 21. Ainsi, connaissant la hauteur maximale d'immersion de l'enveloppe 1, il est possible de calculer le volume de la partie 21 pour que l'eau n'atteigne pas le niveau de l'ouverture 20 et que la partie 110 et les organes 2, 3, 4, 5, 6 qu'elle contient soient préservés de tout contact avec l'eau.

Ce mode de réalisation présente les mêmes avantages que le premier.

Bien entendu, l'invention n'est pas limitée aux exemples de réalisation que l'on vient de décrire et on peut apporter à ceux-ci de nombreuses modifications sans sortir du cadre de l'invention.

Ainsi, l'invention peut s'appliquer à toutes sortes d'installations renfermant des organes électriques ou autres sensibles au contact de l'eau, mais pouvant supporter une pression supérieure à la pression atmosphérique.

**Revendications**

1. Installation électrique immergeable dans l'eau, en particulier dans l'eau de mer, comprenant une enveloppe extérieure (1) dans laquelle sont regroupés les organes (2, 3, 4, 5, 6) de l'installation qui ne supportent pas le contact direct avec l'eau, caractérisée en ce que la partie inférieure (7 ; 107) de l'enveloppe (1) comporte au moins une ouverture (8 ; 108) fermée par un volet (9 ; 109), ce volet (9 ; 109) pouvant s'ouvrir sous l'effet de la pression d'eau lorsque l'enveloppe (1) est immergée.

2. Installation conforme à la revendication 1, caractérisée en ce que les organes (2, 3, 4, 5, 6) qui ne supportent pas le contact avec l'eau sont placés au-dessus du niveau maximum N que l'eau peut atteindre à l'intérieur de l'enveloppe (1).

3. Installation conforme à l'une des revendications 1 ou 2, caractérisée en ce que la partie (7) de l'enveloppe extérieure (1) qui est situés sous les organes (2, 3, 4, 5, 6) qui ne supportent pas le contact avec l'eau est élargie par rapport à la partie (10) de l'enveloppe qui est située au-dessus desdits organes.

4. Installation conforme à la revendication 1, caractérisée en ce qu'une cloison intérieure (19) sépare de façon sensiblement étanche l'enveloppe (1) en une partie (110) dans laquelle sont regroupés les organes (2, 3, 4, 5, 6) qui ne supportent pas le contact direct avec l'eau, et une partie (21) qui ne comporte aucun organe et qui présente à sa partie inférieure (107) au moins une ouverture (108) fermée par un volet (109), la cloison (19) comportant à sa partie supérieure une ouverture (20) mettant en communication les parties (110) et (21).

5. Installation conforme à l'une des revendications 3 ou 4, caractérisée en ce que lesdites parties (7, 10 ; 110, 19) de l'enveloppe (1) sont de forme générale parallélépipédique.

6. Installation conforme à l'une des revendications 1 à 5, caractérisée en ce que la partie inférieure (7 ; 107) de l'enveloppe comprend plusieurs ouvertures (8 ; 108) fermées chacune par un volet (9 ; 109).

7. Installation conforme à l'une des revendications 1 à 6, caractérisée en ce que chaque volet (9 ; 109) est articulé au bord supérieur de l'ouverture (8 ; 108) et ferme celle-ci de façon sensiblement étanche lorsque l'enveloppe (1) n'est pas immergée dans l'eau, ledit volet (9 ; 109) pouvant s'ouvrir vers l'intérieur de l'enveloppe (1) sous l'effet de la pression de l'eau lorsque cette enveloppe est immergeée.

8. Installation conforme à l'une des revendications 1 à 7, caractérisée en ce que l'enveloppe (1) est en tôle d'acier dont l'épaisseur est inférieure à celle normalement nécessaire pour supporter la pression de l'eau lorsque l'enveloppe est immergée.

9. Installation conforme à l'une des revendications 1 à 8, caractérisée en ce que les faces latérales de l'enveloppe (1) comportent des panneaux amovibles (12) en regard des organes (2, 3, 4, 5, 6) ne supportant pas le contact avec l'eau.

10. Installation conforme à l'une des revendications 1 à 9, caractérisée en ce qu'elle comprend un transformateur (13) de tension immergeable placé à l'extérieur de l'enveloppe (1), cette dernière renfermant les organes (2, 3, 4, 5, 6) de protection et de commande du transformateur, ces organes étant reliés au transformateur par des câbles haute tension et basse tension étanches (15, 16).

11. Installation conforme à la revendication 10, caractérisée en ce que l'enveloppe (1) et le transformateur (13) sont fixés dans le prolongement l'un de l'autre sur un bâti (14) commun formant socle.

FIG_1

0279748

FIG_2

0279748

0279748

FIG.3

FIG.4

0279748

## FIG. 5

## FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 589 838 (COMPAGNIE FRANCAISE DE PETROLES) <br> * Figure 1; page 1, ligne 39 – page 2, ligne 18; page 3, lignes 1-6,30-34 * <br> --- | 1-3 | H 02 B 1/12 <br> B 63 C 11/52 |
| A | DE-A-2 320 707 (MÜLLER et al.) <br> * Figure 1; page 5, lignes 9-18 * <br> --- | 1,9-11 | |
| A | US-A-2 247 936 (W. BISHOP) <br> * Figure 1; page 2, colonne de gauche, lignes 26-40 * <br> ----- | 1,2 | |

|  | DOMAINES TECHNIQUES RECHERCHES (Int. Cl.4) |
|---|---|
|  | H 02 B <br> E 02 D <br> B 63 C <br> H 01 F |

Le présent rapport a été établi pour toutes les revendications

| Lieu de la recherche | Date d'achèvement de la recherche | Examinateur |
|---|---|---|
| LA HAYE | 25-03-1988 | WOODALL C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)